# EUROPEAN PATENT APPLICATION

(11) **EP 1 120 731 A2**
(43) Date of publication of application: **01.08.2001**
(21) Application number: 01300655.6
(22) Date of filing: 25.01.2001
(51) Int. Cl.: G06F 17/60, G06F 1/00

(54) **Method and system for content commercialization**

(30) Priority: 27.01.2000 US 493023
(71) Applicant: Alchemedia Ltd., Beit Shemesh 99100 (IL)
(72) Inventor: Goldman, Andrew, Beit Shemesh 99543 (IL); Goodman, Daniel Isaac, Beit Shemesh 99543 (IL); Schreiber, Daniel, Beit Shemesh 99453 (IL); Taragin, Jonathan Chaim, Ramat Beit Shemesh 99000 (IL)
(74) Representative: Beresford, Keith Denis Lewis

(57) **Abstract**

A method for controlling the use and re-use of digital images, including the steps of providing by a first server computer to a client computer a digital image file including a digital image and including goods and services data, the goods and services data determining at least one link to at least one web page, displaying the digital image on the client computer, in response to a first interactive command performed by a user on the displayed digital image, further displaying the at least one link to at least one web page, and, in response to a second interactive command performed by the user on the displayed at least one link, delivering by a second server computer to the client computer, a web page indicated by the at least one link. A system is also described and claimed.

## Description

The present invention relates to digital images, and the control of their use and re-use over a computer network such as the Internet. It also relates to transactions for goods and services associated with digital images.

Software copy protection is a central concern in software development, and in copyright law itself. Typically, software is distributed in shrink-wrap packages containing diskettes and/or CD-ROMs, and by download over the Internet via ftp servers. Protecting software from rampant unauthorized copying, distribution and use ("software piracy") is one of the most challenging problems facing the software industry.

Over the past years, several techniques have been developed for combating software piracy. These include use of hardware plugs, use of license keys, use of tokens and sophisticated encryption systems.

One ofthe leading technologies for controlling use of software within turnkey transaction systems is the Digital Rights Management system of InterTrust® Technologies Corp. of Sunnyvale, CA, as described in U.S. Patents Nos. 5,892,900, 5,410,598, 5,050,213, 4,977,594 and 4,827,508. Information about InterTrust is available on the web at http://www.intertrust.com.

Another leading technology is the CyberSales Solution™ of SoftLock.com, Inc. of Maynard, MA, as described in U.S. Patent No. 5,509,070. CyberSales Solution provides locking and unlocking functionality so that content can be securely previewed by consumers, electronically purchased and redistributed, and it protects the content in an initial transaction and in subsequent information pass-along. Content providers can control how much information is available without paying, and disable, or additionally charge for, the ability to print or cut and paste. CyberSales Solution handles secure transactions, remittance processing, reports, audits and customer service. Information about CyberSales Solution is available on the web at http://www.softlock.com.

With the advent of the use of compelling multi-media on web pages accessible over the Internet, protection of digital images and other media is becoming increasingly critical. Web designers are reluctant to use valuable digital "works of art" knowing that users can easily copy them onto their own computers, and use them for their own unauthorized purposes. Moreover, anyone using a web browser to view an image posted on the Internet can easily copy the image by simply positioning a mouse pointer over the displayed image, clicking on the right mouse button and selecting a "Save Image As ..." command. Copyright and piracy issues are of major concern to web publishers.

Prior art techniques for protecting digital images include the embedding of invisible digital watermarks within images, so that copies of protected images can be identified and traced. Digimarc Corporation of Lake Oswego, OR embeds hidden messages within pixel data for identifying protected images, and tracks their distribution over the Internet to monitor potential copyright infringement. Digimarc images carry unique IDs that link to predetermined locations on the web. Digimarc images are compatible with standard image formats, such as JPEG, and can be opened and displayed by standard image readers. However, when opened with a Digimarc reader, the images are displayed together with a "Web look up" button that enables a user to identify the sources of the images. Digimarc technology is described in U.S. Patents Nos. 5,862,260, 5,850,481, 5,841,978, 5,841,886, 5,832,119, 5,822,436, 5,809,160, 5,768,426, 5,765,152, 5,748,783, 5,748,763, 5,745,604, 5,721,788, 5,710,834 and 5,636,292. Information about Digimarc is available on the web at http://www.digimarc.com.

These watermarking techniques are useful in thwarting digital image piracy to the extent that they trace pirated content, but they do not prevent unauthorized copying of digital images in the first place.

Other prior art techniques require a webmaster to modify images residing on a server computer in order to protect them. The webmaster is also required to modify his web pages accordingly, so as to reference the modified images. SafeMedia™ is a software product of Internet Expression, Inc. of Exton, PA that converts images from a standard format such as JPEG into a SIF (Safe Image Format). SIF images can only be viewed with a SafeMedia Java viewer. SafeMedia embeds a host or domain name into an image, and checks that the image is located on the web site it was intended for. SafeMedia also includes enhanced system control for preventing screen capture by disabling a clipboard. Information about SafeMedia is available on the web at http://www.safemedia.com.

These prior art techniques are difficult to embrace, since they require modification of all protected images on the web, as well as modification of the web pages that reference them. Furthermore the SIF Java viewer has the limitation of only being able to load images from the same server that the viewer came from.

Other prior art techniques for protecting digital images use Java applets within web browsers to disable the menu that pops up when a user right clicks on a displayed image within his web browser. Copysight® is a software application of Intellectual Protocols, LLC of Nanuet, NY that uses digital watermarking and fingerprinting to protect images, and includes a Java applet that disables the ability to save displayed images within a web browser and the ability to print them. Copysight operates by converting unprotected files to protected files that are encrypted and that contain digital fingerprints. Copysight also tracks distribution of protected images across the Internet, and issues reports of potential copyright infringement. Information about Copysight is available on the web at http://www.ip2.com.

These prior art techniques disable unauthorized copying of digital images from within web browsers, but they do not protect the images from being copied by an application external to the web browser. For example, they do not prevent a user from copying digital images displayed in his web browser by means of an application running external to the web browser, such as an image editing tool, or by means of a Print Screen or other such command that serves to capture contents of a video RAM to a clipboard. Thus a Java applet that prevents unauthorized copying of digital images from within Netscape Communicator or Internet Explorer can be circumvented by a user pressing on a Print Screen button of his keyboard, or by a user copying and pasting from a window of his web browser to a window of another software application.

Another drawback with many prior art copy protection techniques for digital images is that although they prevent unauthorized copying to some extent, as described hereinabove, they do not provide a direct way for obtaining authorized use. Thus, for example, if a user is prevented from copying a digital image but would be interested in purchasing a copy of the image, in many instances he cannot determine how to go about doing so. This is often the case when a digital image is re-posted on various web sites, despite the fact that e-commerce is becoming more and more pervasive over the Internet.

In most instances content providers are primarily interested in profiting from their content. The motivation for posting their content on the Internet is the broad inexpensive distribution channel that the Internet provides. The ability for users to freely copy images over the Internet is a major deterrent in this regard, and indeed copy protection for digital images removes this deterrent to some extent. But content providers would profit better if there was also a direct way to capture opportunities for licensing authorized use of their content.

The present invention provides a method and system for controlling the use and re-use of digital images over a computer network. An overall methodology of the present invention is to not only prevent unauthorized copying and use of digital images, but, in doing so, to also promote and enable authorized use.

The present invention uses an encrypted image format which serves both to protect the image content from being copied, and to channel the use and re-use of the image content based on goods and services associated therewith. The images used in the present invention require viewer software for viewing within a web browser, or within digital image software applications. The viewer software provides (i) rigorous access control, and (ii) extended functionality for the images of the present invention. Rigorous access control preferably includes use restriction based on privileged users. Extended functionality preferably includes the ability to encapsulate commercial goods and services data within the image, and enable transactions.

For example, information about mugs, t-shirts, fan clubs and tickets to sports events can be associated with a digital image of a famous sports athlete. A user viewing the digital image over the Internet cannot copy the image, but he can invoke a list of goods and services associated therewith, which can be used, for example, to purchase one or more copies of the image, or to purchase photo products that include the image. The list preferably includes links to web pages for the providers of the goods and services. By clicking on one of the links, the user can browse a provider's web page, and perform a transaction such as ordering a mug with a picture of the sports athlete thereon, or joining a sports fan club. The digital image thus carries along with it a virtual store for associated goods and services. Slogans used to describe the present invention are "transforming content to commerce," and "every image is a store."

In a preferred embodiment, the digital images used in the present invention are included in digital image files that also include (i) image description data and (ii) goods and services data, in addition to image pixel data. The image description data preferably includes data items for the name of the image, an image identifier (ID), one or more keywords associated with the image, and one or more rules for re-posting the image, as described hereinbelow. For ease of management and organization, the goods and services data preferably references one or more central databases. For each image entered into a central database, there is included information about one or more goods and services associated therewith. The goods and services information preferably includes fields for an index number, a price range, a universal resource locator (URL), text for a dialogue box, header information and instructions for opening a web page located at the URL, as described hereinbelow.

An advantage of the present invention is the ease with which goods and services information can be modified. Additional goods and services information can be entered into the database, thus enabling new transactions to be associated with a digital image. Existing goods and services can be deleted, thus removing transactions at will. Existing goods and services information can be modified, thus enabling content providers to change pricing, header information, URL locations, and other relevant information.

Another advantage of the present invention is that the goods and services information can be managed in one or more central databases, which are referenced by all copies of the digital image, obviating the need to recall, replace or modify copies of digital images that have proliferated on the Internet when goods and services information has changed.

The present invention prevents unauthorized copying of digital images, and thus provides copy protection to the owners of the digital images. Consequently the owners are able to safely post their image content on the Internet.

The present invention also enables and assists owners in commercializing their content. By carrying goods and services information along with each copy of a digital image, proliferation of copies of a digital image can be used to enable widespread marketing. Thus, rather than prevent the re-posting of digital images, using the present invention it is in the content provider's best interest to allow his images to be re-posted, since each re-posted image is copy protected and since each re-posted image carries along with it a virtual store of goods and services associated therewith. The philosophy of promoting prolific re-posting of images is seemingly contrary to copyright intuition, but in fact it affords a practical way for content owners to safely commercialize their content.

There is thus provided in accordance with a preferred embodiment of the present invention a method for controlling the use and re-use of digital images, including the steps of providing by a first server computer to a client computer a digital image file including a digital image and including goods and services data, the goods and services data determining at least one link to at least one web page, displaying the digital image on the client computer, in response to a first interactive command performed by a user on the displayed digital image, further displaying the at least one link to at least one web page, and, in response to a second interactive command performed by the user on the displayed at least one link, delivering by a second server computer to the client computer, a web page indicated by the at least one link.

There is further provided in accordance with a preferred embodiment of the present invention a system for controlling the use and re-use of digital images, including a first transmitter providing, by a server computer to a client computer, a digital image file including a digital image and including goods and services data, goods and services data determining at least one link to at least one web page, a viewer displaying the digital image on the client computer and displaying, in response to a first interactive command performed by a user on the displayed digital image, the at least one link to at least one web page, and a second transmitter delivering by a second server computer to the client computer, in response to a second interactive command performed by the user on the at least one link, a web page indicated by the at least one link.

There is yet further provided in accordance with a preferred embodiment of the present invention a method for controlling the use and re-use of digital images, including the steps of providing by a first server computer to a client computer, a digital image file including a digital image and including goods and services data, the goods and services data determining at least one link to at least one web page, displaying the digital image on the client computer, further displaying the at least one link to at least one web page, and, in response to an interactive command performed by the user on the displayed at least one link, delivering by a second server computer to the client computer, a web page indicated by the at least one link.

There is additionally provided in accordance with a preferred embodiment of the present invention a system for controlling the use and re-use of digital images, including a first transmitter providing, by a server computer to a client computer, a digital image file including a digital image and including goods and services data, goods and services data determining at least one link to at least one web page, a viewer displaying the digital image on the client computer and displaying the at least one link to at least one web page, and a second transmitter delivering by a second server computer to the client computer, in response to an interactive command performed by the user on the at least one link, a web page indicated by the at least one link.

Further aspects of the present invention are set out in the appended claims.

### BRIEF DESCRIPTION OF THE DRAWINGS

The present invention will be more fully understood and appreciated from the following detailed description, taken in conjunction with the drawings in which:
Figure 1 is a simplified illustration of a digital image file including image description data and goods and services data, the goods and services data referencing a central database used for storing and managing digital images and goods and services associated therewith;
Figure 2 is a simplified illustration of image description data stored within the digital image of Figure 1;
Figure 3 is a simplified illustration of goods and services data stored within the database of Figure 1; and
Figure 4 is an illustration of a sample web page in which is displayed an image and associated goods and- services information, in accordance with a preferred embodiment of the present invention;
Figure 5 is an illustration of a list of goods and services associated with an image, in accordance with a preferred embodiment of the present invention;
Figure 6 is an illustration of image description data, in accordance with a preferred embodiment of the present invention;
Figure 7 is an illustration of a web page containing a commerce-enabled image, according to a preferred embodiment of the present invention;
Figure 8 is an illustration of how copies of an image that are re-posted on various web sites are each associated with the same list of goods and services, in accordance with a preferred embodiment of the present invention; and
Figure 9 is a simple illustration of a networked architecture in which a preferred embodiment of the present invention is implemented.

### LIST OF APPENDICES

Appendix A is a listing of software in a JavaScript programming language for a prototype of a system for associating lists of channels with commerce-enabled images, in accordance with a preferred embodiment of the present invention;
Appendix B is a listing of an original HTML page including JavaScript commands to invoke the software listed in Appendix A; and
Appendix C is a listing of blocks of HTML generated by the software listed in Appendix A and inserted into the HTML page listed in Appendix B.

### DETAILED DESCRIPTION OF A PREFERRED EMBODIMENT

The present invention provides a method and system for controlling the use and re-use of digital images over a computer network. An overall methodology of the present invention is to not only prevent unauthorized copying and use of digital images, but, in doing so, to also promote and enable authorized use.

The present invention uses an encrypted image format which serves both to protect the image content from being copied, and to channel the use and re-use of the image content based on goods and services associated therewith. The images used in the present invention require viewer software for viewing within a web browser, or within digital image software applications. The viewer software provides (i) rigorous access control, and (ii) extended functionality for the images of the present invention. Rigorous access control preferably includes use restriction based on privileged users. Extended functionality preferably includes the ability to encapsulate commercial goods and services data within the image, and enable transactions.

For example, information about mugs, t-shirts, fan clubs and tickets to sports events can be associated with a digital image of a famous sports athlete. A user viewing the digital image over the Internet cannot copy the image, but he can invoke a list of goods and services associated therewith, which can be used, for example, to purchase one or more copies of the image, or to purchase photo products that include the image. The list preferably includes links to web pages for the providers of the goods and services. By clicking on one of the links, the user can browse a provider's web page, and perform a transaction such as ordering a mug with a picture of the sports athlete thereon, or joining a sports fan club. The digital image thus carries along with it a virtual store for associated goods and services. Slogans used to describe the present invention are "transforming content to commerce," and "every image is a store."

In a preferred embodiment, the digital images used in the present invention are included in digital image files that also include (i) image description data, and (ii) goods and services data, in addition to digital image data. For ease of management and organization, the goods and services data preferably references one or more central databases. For each image entered into a database, there is included information about one or more goods and services associated therewith.

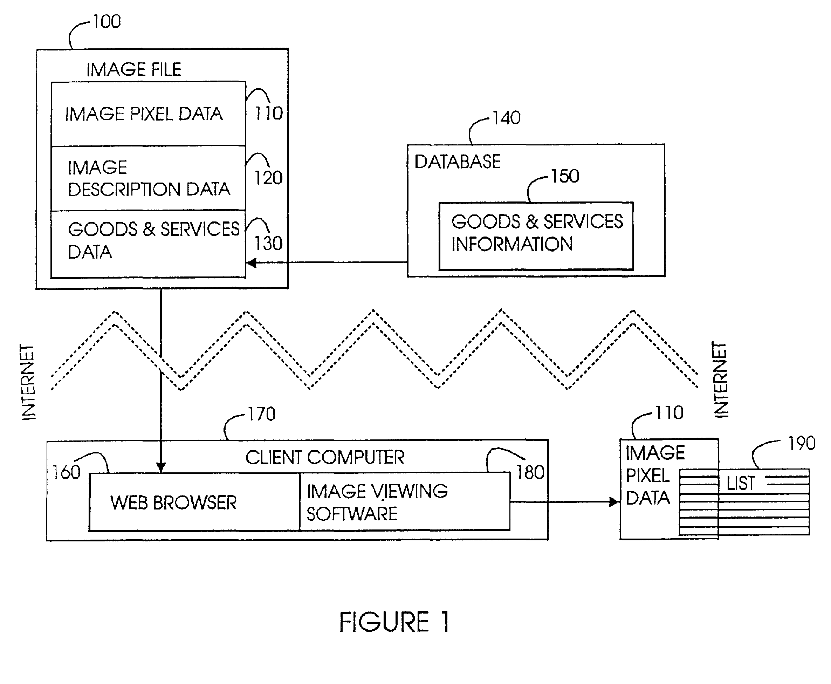

Reference is now made to Figure 1, which is a simplified illustration of an image file 100 including image pixel data 110, including image description data 120, and including goods and services data 130 that references a central database 140, used for storing and managing digital images and goods and services associated therewith. It is appreciated that central database 140 may be implemented as a single database, or as a plurality of databases. Central database 140 preferably contains goods and services information 150. When a web browser 160 in a client computer 170 accesses image file 100 over the Internet, image viewing software 180 in client computer 170 is used to render and display image pixel data 110.

When a user who is viewing image pixel data 110 activates an appropriate interactive command, image viewing software 180 displays a list 190 of one or more goods and services and relevant information about them, based on goods and services information 150. The appropriate interactive command that triggers the display of list 190 can be the positioning a mouse pointer over displayed image pixel data 110, or the right clicking or the left clicking on a mouse device when its pointer is positioned over displayed image pixel data 110. It is apparent to those skilled in the art that many alternatives can be implemented for the appropriate interactive command, and that a plurality of such interactive commands can also be implemented.

List 190 is generated from goods and services data 130 included within image file 100. In a preferred embodiment of the present invention, goods and services data 130 includes links to goods and services information 150 contained within database 140. Goods and services information 150 is downloaded from database 140 to client computer 170, and used to populate the various line item selections in list 190.

It may be appreciated that maintaining database 140 at one or more central storages enables list 190 to be automatically dynamically updated whenever goods and services information 150 is changed within database 140. In this way, modifications made to goods and services information 150 are populated throughout the many Internet locations where image file 100 is resident.

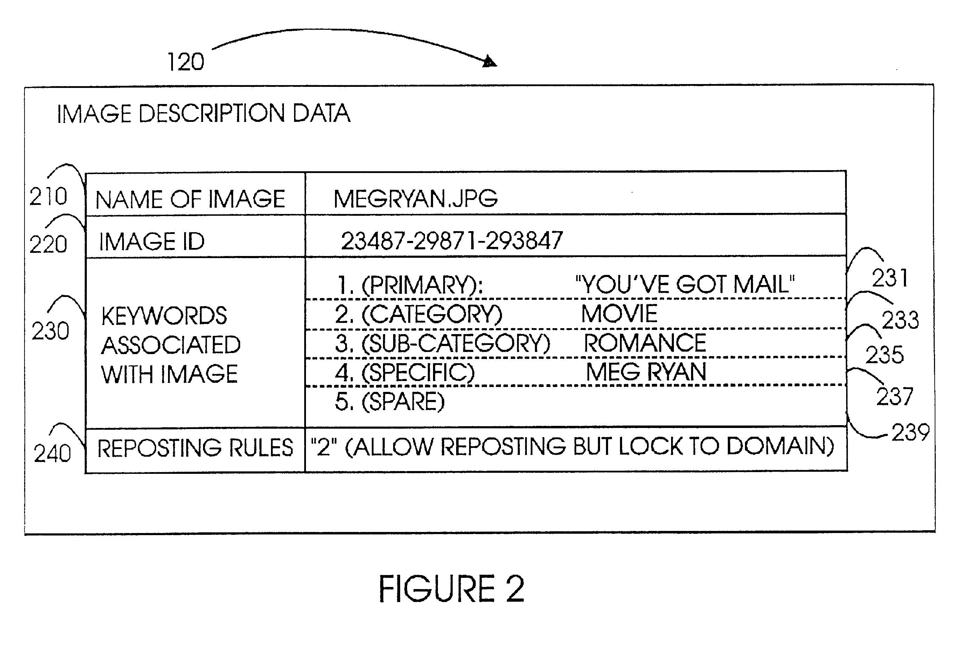

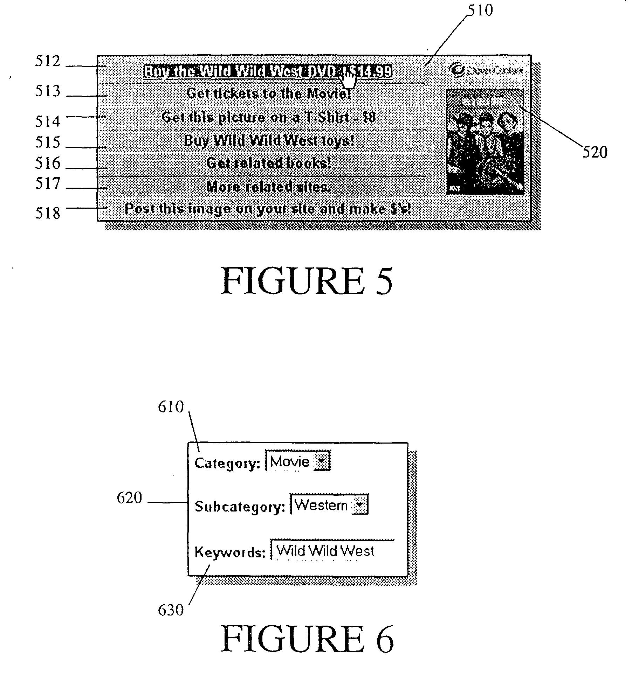

Image description data 120 preferably includes data items for the name of the image, an image identifier (ID), one or more keywords associated with the image, and one or more rules for re-posting the image. Reference is now made to Figure 2, which is a simplified illustration of image description data 120 stored within image file 100. A name 210 of the image is stored, so as to identify the name of image file 100. An image ID 220 is preferably used to uniquely identify image file 100 within database 140. One or more descriptive keywords 230, specific to image file 100, are stored. Illustrated in Figure 2 are a primary keyword 231, a category keyword 233, a sub-category keyword 235, an image-specific keyword 237 and a spare keyword 239. Also illustrated in Figure 2 is a re-posting rule 240. Re-posting rule 240 is used to specify the restrictions that apply to image file 100 when it is re-posted on another web site. For example, re-posting rule 240 may lock image pixel data 110 from being viewed unless it resides within a specified domain. Figure 6 (below) illustrates a simple user-interface for specifying image description data for an image.

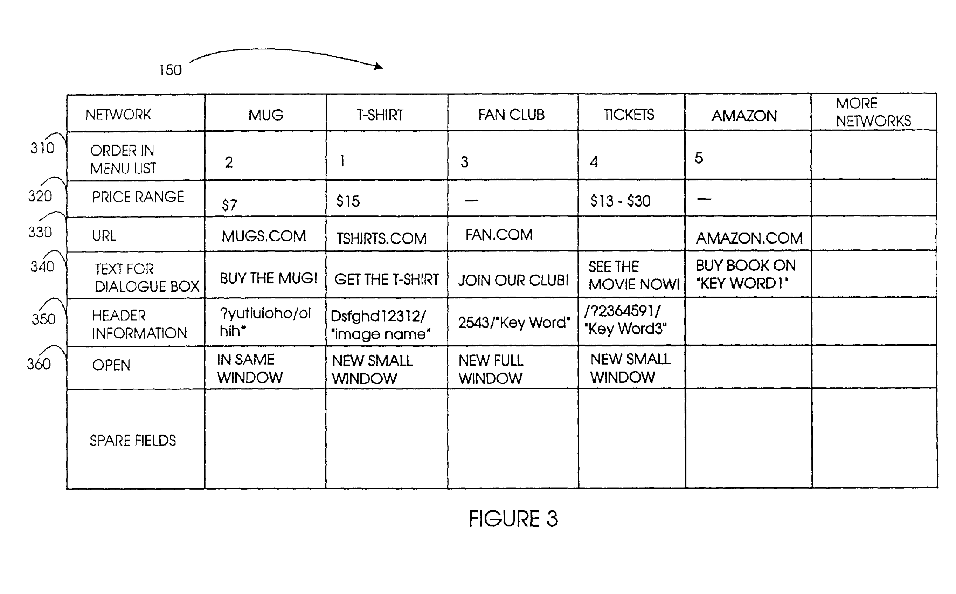

Goods and services information 150 preferably includes fields for an index number, a price range, a universal resource locator (URL), text for a dialogue box, header information and instructions for opening a web page located at the URL. Reference is now made to Figure 3, which is a simplified illustration of goods and services data 150 stored within central database 140. Index number 310 is used to order the goods or service within list 190. Price range 320 indicates the price of the goods or service. URL 330 is a link to a provider's web page, from which detailed information about the goods or service can be obtained, and from which the goods or service can be licensed or purchased. Text 340 is displayed within a dialogue box when list 190 is invoked. Header information 350 is used to identify the goods or service. Open instructions 360 are used for opening a provider's web page to which URL 330 is linked. For example, instructions 360 may specify that the provider's web page is to be opened in the same window in which image pixel data 110 is being viewed, or in a new small window or in a new large window.

In a preferred embodiment the present invention allows keywords 230 from image description data 130 to be inserted within text 340 and/or within header information 350. For example, Figure 3 illustrates that keyword 231 ("Key Wordl") is to be inserted within text 340 for the Amazon goods provider. Amazon.com, Inc., of Seattle, WA, is a well-known e-commerce site for purchasing books, audio CDs and video cassettes. In the example illustrated in Figure 3, a user viewing image pixel data 110 can go to Amazon.com's web site and order books associated therewith, by simply clicking on the link #5 within list 190.

An advantage of the present invention is the ease with which goods and services information 150 can be modified. Additional goods and services information can be entered into database 140, thus enabling new transactions to be associated with a digital image. Existing goods and services can be deleted, thus removing transactions at will. Existing goods and services information can be modified, thus enabling content providers to change pricing, header information, URL locations, and other relevant information.

Another advantage of the present invention is that the goods and services information 150 is managed in one or more central databases, which are referenced by all copies of the digital image, obviating the need to recall, replace or modify copies of digital images that have proliferated on the Internet when goods and services information 150 has changed.

The present invention prevents unauthorized copying of digital images, and thus provides copy protection to the owners of the digital images. Consequently the owners are able to safely post their image content on the Internet.

Preferably image data 120 is encrypted image data, which can only be opened using viewing software 180. As such, use and re-use of image data 120 can be rigorously controlled by viewer software 180.

The present invention also enables owners to commercialize their content. By carrying goods and services data 130 along with it, proliferation of a digital image can be used to enable widespread marketing. Thus, rather than prevent the re-posting of digital images, using the present invention it is in the content provider's best interest to allow his images to be re-posted, since each re-posted image is copy protected and since each re-posted image carries along with it a virtual store of goods and services associated therewith. The philosophy of promoting prolific re-posting of images is seemingly contrary to copyright intuition, but in fact it affords a practical way for content owners to safely commercialize their content.

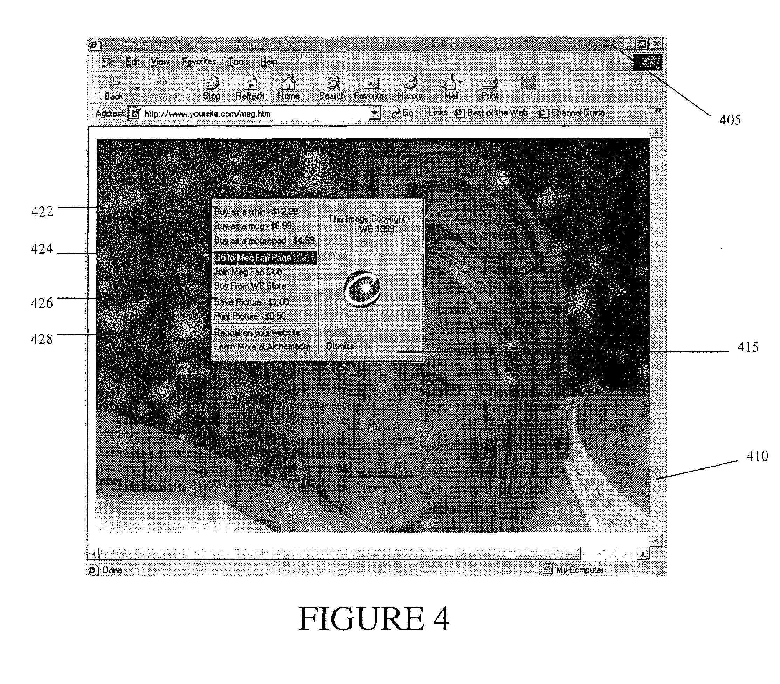

Reference is now made to Figure 4, which illustrates a sample web page in which is displayed an image and associated goods and services information, in accordance with a preferred embodiment of the present invention. A window 405 of a web browser displays image pixel data 410 including an image of Meg Ryan. When a user positions a mouse over pixel data 410 and clicks the right mouse button, a list 415 of goods and services is displayed. List 415 includes items such as item 422 "Buy as a tshirt - $12.99," item 424 "Go to Meg Fan Page," item 426 "Save picture - $1.00" and item 428 "Repost on your website."

All of the items in list 415 are hyperlinks. Clicking on any one of them with the left mouse button activates a URL, which, in turn, causes the browser to download and display an appropriate web page, such as a web page for ordering a tshirt (if item 422 is selected) or a copy of the Meg Ryan picture (if item 424 is selected), or a web page with instructions for reposting the image (if item 428 is selected). Wherever the image is reposted, it will always carry along with it the data necessary to generate list 415. Moreover, list 415 is automatically dynamically updated whenever goods and service information 150 is modified. List 415 represents the "virtual store" that each copy of the image transports.

Reference is now made to Figure 5, which illustrates a list 510 of goods and services associated with an image 520 of the movie "Wild Wild West," in accordance with a preferred embodiment of the present invention. List 510 includes item 512 for purchasing the DVD, item 513 for purchasing tickets to the movie, item 514 for purchasing a T-shirt having the image on it, item 515 for purchasing a Wild Wild West toy, item 516 for purchasing related books, item 517 for browsing related sites, and item 518 for re-posting the image. Preferably, list 510 is activated so that whenever a user clicks on one of the items 512 - 518 a corresponding web page is rendered, the web page enabling the user to purchase the desired item or to browse a related site or to re-post image 520. Wherever image 520 is re-posted, list 510 will be accessible from it, effectively making each re-posted copy of image 520 a virtual store.

List 510 is preferably displayed in response to a user action, such as positioning a mouse pointed over image 520, or right clicking on a mouse when it is positioned over image 520. Alternatively, list 510 can be displayed along with image 520 without the need for a user action to activate it.

Each of the items in list 510 can be considered as a "channel," and the items are also referred to as channels henceforth in this specification. A channel includes at least (1) a URL, (2) a text descriptor. It may also include (3) a small image (icon), and (4) a script, such as a CGI script.

Some e-commerce web sites today, such as the web site http://ww.amazon.com, of Amazon.com, Inc. of Seattle WA., offer commission-based affiliate marketing programs whereby third party affiliates can promote Amazon.com's goods at a third party site, and earn revenues for each order generated from customers they bring to Amazon.com. Amazon.com is well know for its on-line store of books, audio CDs and video tapes and DVDs. From the Amazon.com web site, visitors can join Amazon.com's Associates Program. The affiliates register with Amazon.com, and then customers are brought to Amazon.com by clicking on a link to http://www.amazon.com located at the affiliate's web site. Amazon.com tracks the origin of each customer brought by its affiliates, and, if the customer orders a product, Amazon.com pays the affiliate a commission. The affiliate thus becomes a virtual Amazon.com "sales person". In a preferred embodiment of the present invention, the channels in list 510 can be affiliate programs. For example, item 516 for buying books can include a link from an affiliate, together with the requisite affiliate information. Such a channel can be set up within the current framework of goods providers such as Amazon.com, without requiring additional web-based development.

Reference is now made to Figure 6, which illustrates image description data 120 (Figure 1) for image 520 (Figure 5), in accordance with a preferred embodiment of the present invention. Illustrated in the Figure are a category 610, a sub-category 620 and keywords 630 associated with image 520. These image descriptors are displayed in a user interface, preferably similar to the simple user interface illustrated in Figure 6, and a user enters text data for the fields. Description data is specific to a particular image, although many images can have the same description data, as appropriate.

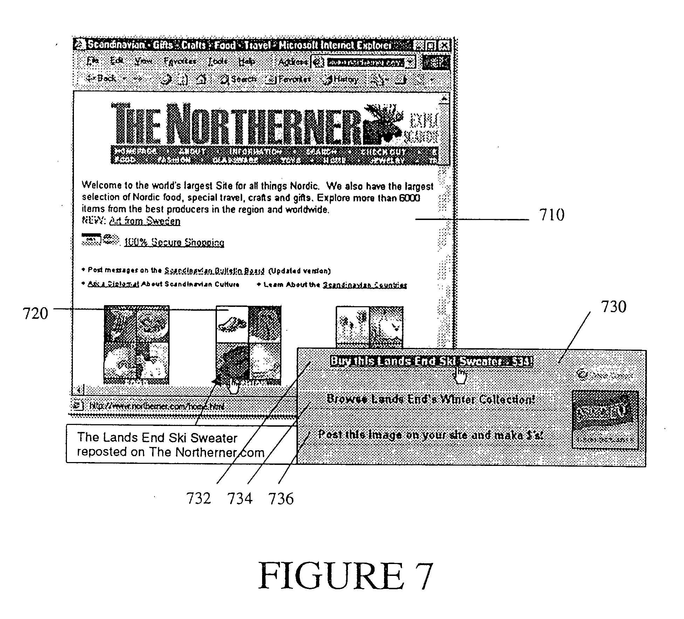

Reference is now made to Figure 7, which illustrates a web page 710 containing a commerce-enabled image 720 of a piece of merchandise, namely, a ski sweater, according to a preferred embodiment of the present invention. Preferably, when a user right-clicks on image 720, a list 730 is displayed and activated. List 730 includes item 732 for buying the ski sweater, item 734 for browsing a store's winter collection, and item 736 for re-posting image 720 on another web site. The list is activated, so that when a user clicks on item 732, for example, he is linked to a web page that enables him to interface with transaction software and purchase the sweater. Similarly, when he clicks in item 734, for example, he is linked to a web page for an on-line store with winter ski-ware. Alternatively, when he clicks on 734, he can be linked to a web page with a catalog of winter ski-ware, which can be purchased offline, or possibly on-line as well.

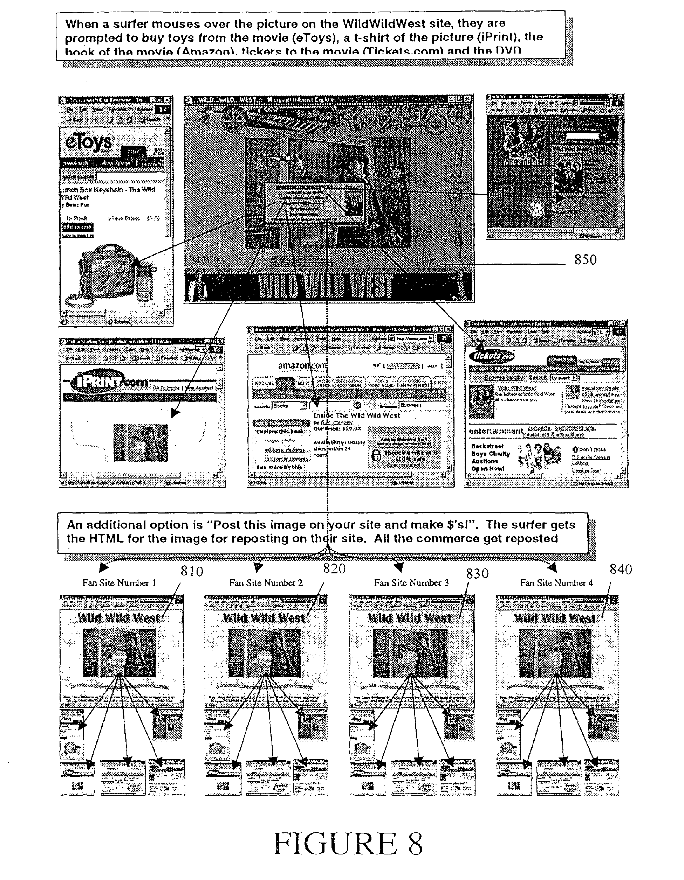

Reference is now made to Figure 8, which illustrates how copies of an image that are re-posted on various web sites are each associated with the same list of goods and services, in accordance with a preferred embodiment of the present invention. Each of the re-posted images 810, 820, 830 and 840 carries with it the same channels that are associated with the original image 850. Thus it can be appreciated that the present invention enables each re-posted image to be its own virtual store.

### Implementation Details

The present invention is preferably implemented in a distributed computing environment in which one or more image databases and one or more channel databases reside on one or more server computers connected by a network such as the Internet.

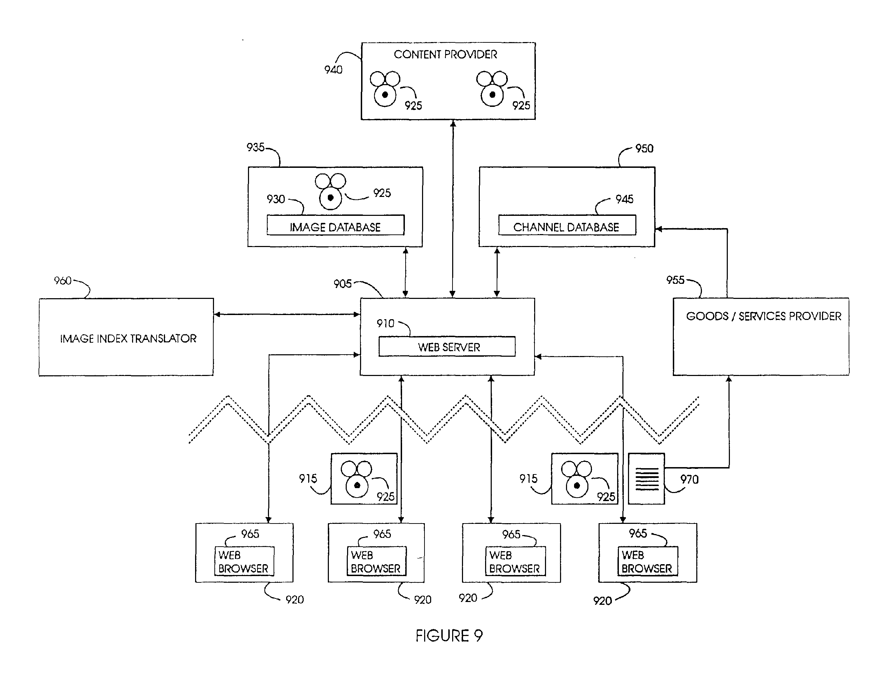

Reference is now made to Figure 9, which illustrates a simple networked architecture in which a preferred embodiment of the present invention is implemented. A server computer 905 containing web server software 910 provides web pages 915, such as HTML pages or XML pages, to client computers 920. Web pages 915 contain links to images 925. Image description data for images 925 is stored in image databases 930 on one or more image server computers 935. In a preferred embodiment of the present invention the images 925 themselves are also stored on image server computers 935.

In an alternate embodiment, some or all of the images 925 can reside on one or more other computers 940 administered by content providers, and the image server computer 935 may store only path and filename information for such images. Server computer 905 can use this information to link to the images on computer 940.

Storing images 925 on image server computers 935 is preferable in order to best ensure constant access to the images. Otherwise, if a content provider removes an image from computer 940, or moves it to another directory, server computer 905 would not be able to retrieve it.

Channel information is stored in channel databases 945 on one or more server computers 950. Channel information includes at least a URL and a text description, and may also include a small image (icon). Channel information may be keyed to image description data, as is illustrated above with reference to Figure 3. URLs in channel information preferably link to server computers 955 administered by goods and services providers. For example, referring back to Figure 5, channel item 515 for buying toys related to the "Wild Wild West" movie preferably links to an on-line toy store.

Each image in image database 930 has a unique identifier, and the channel information in channel database 945 is indexed according to image identifiers, so that each image in database 930 has a list of channels associated therewith. Maintenance of images and image description data is centralized on one or more image server computers 935, and maintenance of channel information is centralized on one or more server computers 950. Translation of image references in web pages 915 to image identifiers can be performed on server computer 905, or, optionally, on a different computer 960.

A client computer 920 connecting to web server 905 downloads a web page 915, which is displayed by web browser software 965. Web page 915 contains a link to an image 925, preferably resident on image server 935. Image 925 is transmitted to client computer 920 and displayed by web browser software 965 within the displayed web page 915. When a user performs a specific action on image 925, such as moving a mouse pointer over image 925, or right-clicking on image 925 when a mouse pointer is positioned over image 925, a list 970 of channels is displayed by web browser software 965. A user can then select one or more channels within list 970 to purchase goods and services related to image 925, or to browse related web sites, or to re-post image 925 on his own web site.

It can thus be appreciated that the present invention enables centrally managed channel information to be associated together with centrally managed images that are proliferated on many server computers over the Internet as references within web pages.

Reference is now made to Appendix A, which is a listing of software in a JavaScript programming language for a prototype of a system for associating lists of channels with commerce-enabled images, in accordance with a preferred embodiment of the present invention. The JavaScript is invoked within an HTML page, and operates by generating blocks of HTML and inserting the blocks into the HTML page. The writing of the blocks into the HTML page is performed by generating a character string, such as the variable menustring in CCWriteMenu(), and invoking the writeIn() function for the document, such as the function call document.writeIn(menustring). A reference for JavaScript is Flanagan, David, JavaScript: The Definitive Guide (Third Edition), O'Reilly & Associates, Inc., Sebastopol, CA, 1998.

Reference is now made to Appendix B which is a listing of an original HTML page that includes commands to invoke the JavaScript listed in Appendix A. The header of the HTML page includes a call to the JavaScript function clevercontent.js, and the body ofthe HTML page includes a call to show_venice, with the path /images/www.jpg as a parameter.

Reference is now made to Appendix C which is a listing of blocks of HTML generated by the software listed in Appendix A and inserted into the HTML page listed in Appendix B. The HTML page in Appendix C includes a table delineated by TABLE tags, which is used by a web browser to generate a menu with the list of channels associated with the image www.jpg. Rows for each of the various channels in the list of channels appear in the table in Appendix C. The listing in Appendix C includes eight rows, having respective identifiers ID=CCMenuRowl, ..., ID=CCMenuRow8. As described hereinbelow, these rows are generated by the functions WriteMenu() and UpdateMenu() listed in Appendix A.

When the web browser encounters the call to clevercontent.js in the header of the HTML page listed in Appendix B, it imports the necessary functions into the page and invokes the function CCInit(). The function CCInit() defines text, URLs (targets) and icon image references for menu items (channels) that are associated with a default image, whose index is 0. Specifically, CCInit() writes the channel data for default image 0 into the respective arrays CCMenuTexts[0], CCMenuTrgts[0] and CCMenuImgs[0]. For example, the respective text for the four channels associated with the default image is "Read News", "Buy Toys", "Buy Books" and "Alchemedia", and the corresponding respective URLs for the channels are http://www.jpost.com, http://www.toysrus.com, http://amazon.com and http://www.alchemedia.com.

CCInit() calls CCWriteMenu(), which writes the STYLE and TABLE tags, and the corresponding style and table data listed in the first part of Appendix C. To generate the rows of the table for the channels, CCWriteMenu() calls CCGetFullRowEntry(), which writes the DIV tags and corresponding data. The data within the DIV tags includes ID=CCMenuRowj, which serve as identifiers for the rows containing channel data. CCGetFullRowEntry() also calls CCShowImage() for incorporating the icon image reference for each channel into the menu. When the active image is image x, the call to CCShowMenuImage(y) causes the image reference in the menu to be CCMenuImgs[x][y]. As described hereinbelow, CCMenuRowj also contains inner HTML for the channel target and text data.

The last data item written by CCWriteMenu() is an IMG tag for an icon, ccorner.gif, that is positioned in the upper left corner of the image. When the mouse pointer is positioned over ccorner.gif, the web browser calls the function CCPopUp() which generates the menu with the list of channels, and displays the menu.

CCWriteMenu() creates the menu with a maximum number of rows allowed; namely, eight for this prototype, it being understood that any other maximum number can be used instead. Preferably the maximum number of rows are generated when the menu is created since, because of the way dynamical HTML works, it is currently easier to change row data than to add a new row at run time. The eight rows that are created are set to be invisible, and when CCUpdateMenu() is invoked the data in some of the rows is changed, and the rows that are needed are set to be visible.

To display the list of channels, CCPopUP() calls CCUpdateMenu(), which in turn calls CCGetRowEntry() to insert channel URLs (CCMenuTrgts[]) and texts (CCMenuTexts[]) into the rows for the various channels, as inner HTML.

The call to show_venice in the HTML listed in Appendix B writes the IMG tag and corresponding data for an image named Imagel, as listed near the end of Appendix C. Show_venice also writes a callback to invoke a cgi script PicPropsJS.pl (listing not included). Each successive call to show_venice retrieves channel information for a successive image, and writes the channel data for the image into the HTML page. Each successive image is assigned an ID for the page, starting with I and working up. Thus for an image with an ID of 1, the entries in the various arrays indexed 1 are filled by the cgi script with channel information, for the menu associated with that image.

Since the image ID's start at 1, the index 0 is used for default information defined in CCInit(), as described hereinabove. When a user moves a mouse pointer over an image, and if, for some reason (e.g., loss of network connection), the arrays have not been filled in for a given ID, the JavaScript program uses the information for index 0 as default values for the arrays.

The cgi script PicPropsJS.pl is a gateway to the channel database. It generates the channel data for Image1. As with the previous image, the channel data includes text, target and image reference data for arrays CCMenuTexts[1]. CCMenuTrgts[1] and CCMenuImgs[1]. For example, the respective text for the four channels associated with image 1 is "The NFL Home", "Alchemedia.com", "Read related sports stories" and "Get the latest scores", and the corresponding respective URLs for the channels are http://www.nfl.com, http://www.alchemedia.com, http://cnnsi.com and http://www.espn.com. The entry for CCMenuTexts[1][0] is reserved for the number of channels in the menu, and the entry for CCMenuImgs[1][0] is reserved for a default image to be displayed when the mouse pointer is not positioned over any of the channels.

In order that a user can identify an image that is commerce-enabled in accordance with the present invention, the function CCAnimateCursor() displays animated dots over the image, using various styles of dots as listed at the end of the HTML table in Appendix C. CCAnimateCursor() is called by CCMouseOverPicture() when a mouse pointer is positioned over the image, so as to display the animated dots over the image. In addition, CCMouseOverPicture() also calls CCShowIcon() to display a special icon in the upper left corner of the image whenever the mouse pointer is positioned over the image. In this way a user recognizes a commerce-enabled image at once, by the visual cues of the animated dots and the image icon that appear whenever he positions a mouse pointer over the image. It should be apparent to those skilled in the art that other types of visual cues can be used instead of the animated dots over the image and the icon in the upper left corner of the image, to enable a user to recognize a commerce-enabled image.

The image data when encoded by the above described method may be stored on a storage medium, for example as a data carrying disk. An aspect of the present invention therefore comprises a storage medium storing encoded image data processed in accordance with the above described method.

A further aspect of the invention extends to an electrical signal carrying the encoded image data processed by the above method, such signals being communicated over networks such as the internet.

In reading the above description, persons skilled in the art will realize that there are many apparent variations that can be applied to the methods and systems described.

In the foregoing specification, the invention has been described with reference to specific exemplary embodiments thereof. It will, however, be evident that various modifications and changes may be made to the specific exemplary embodiments without departing from the broader spirit and scope of the invention as set forth in the appended claims. Accordingly, the specification and drawings are to be regarded in an illustrative rather than a restrictive sense.

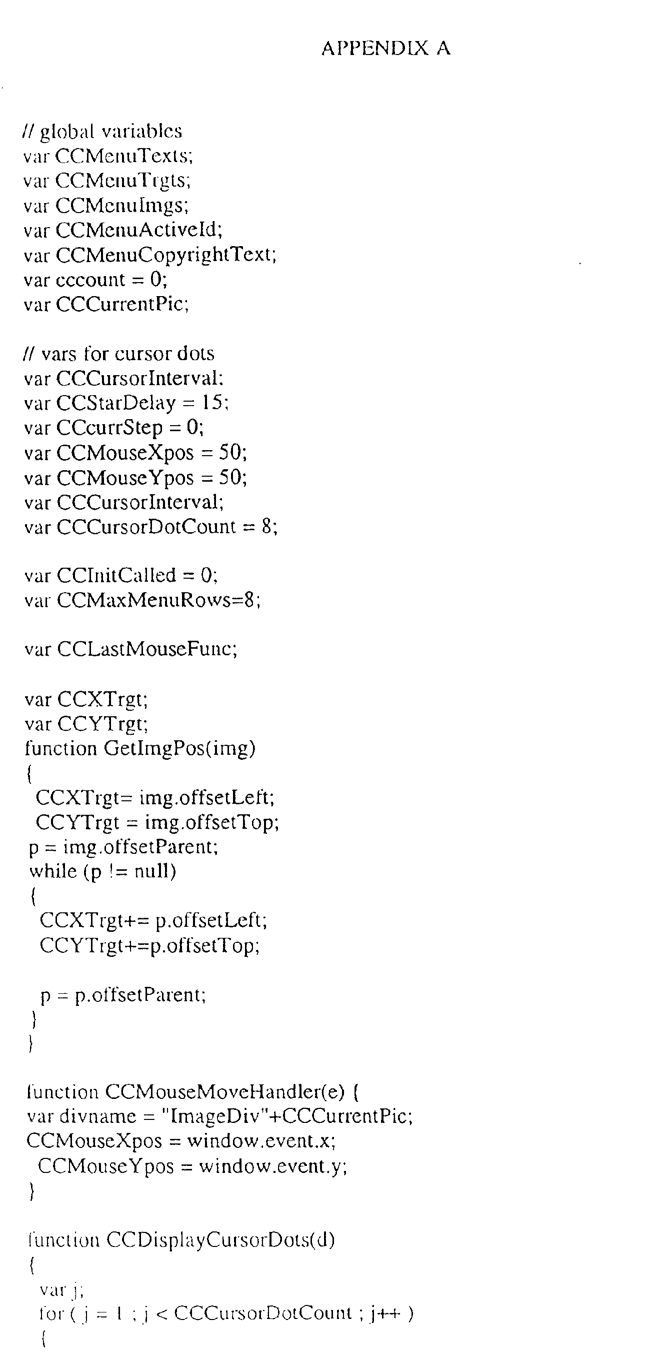

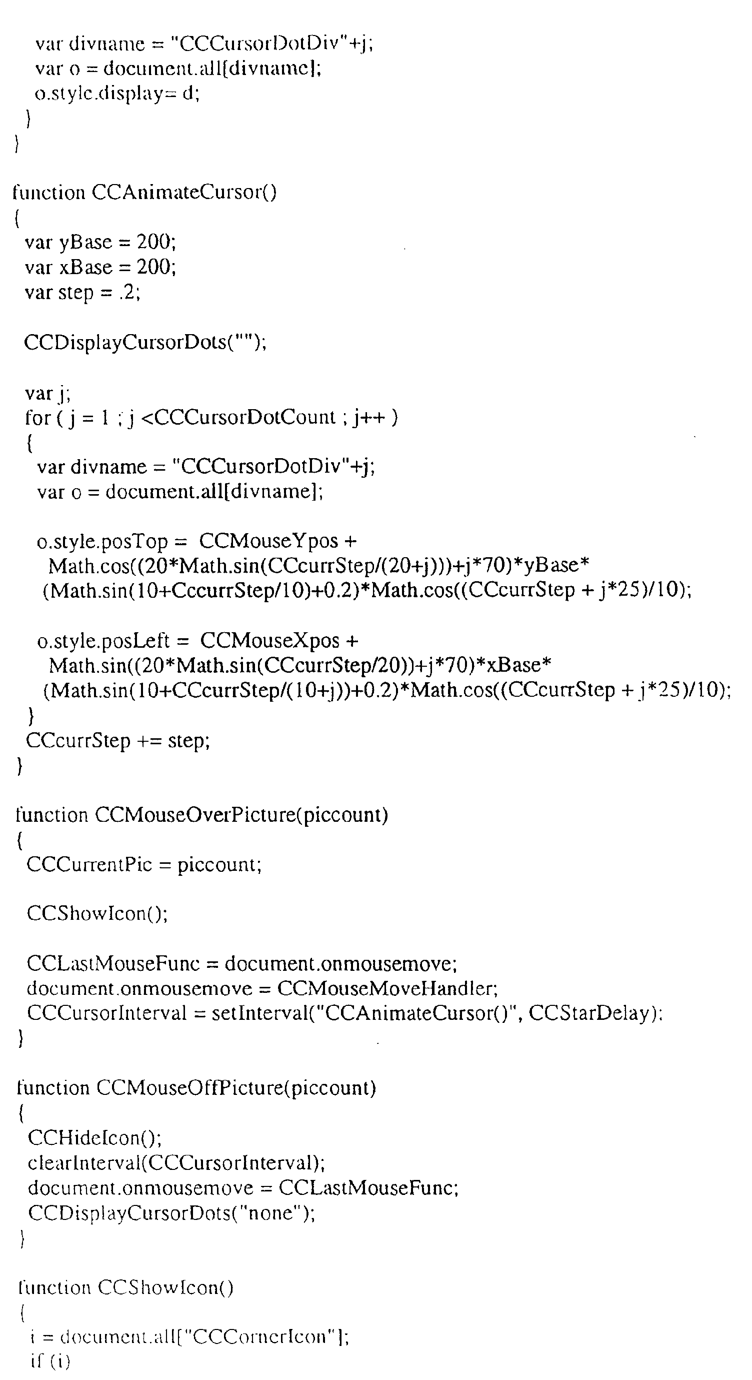

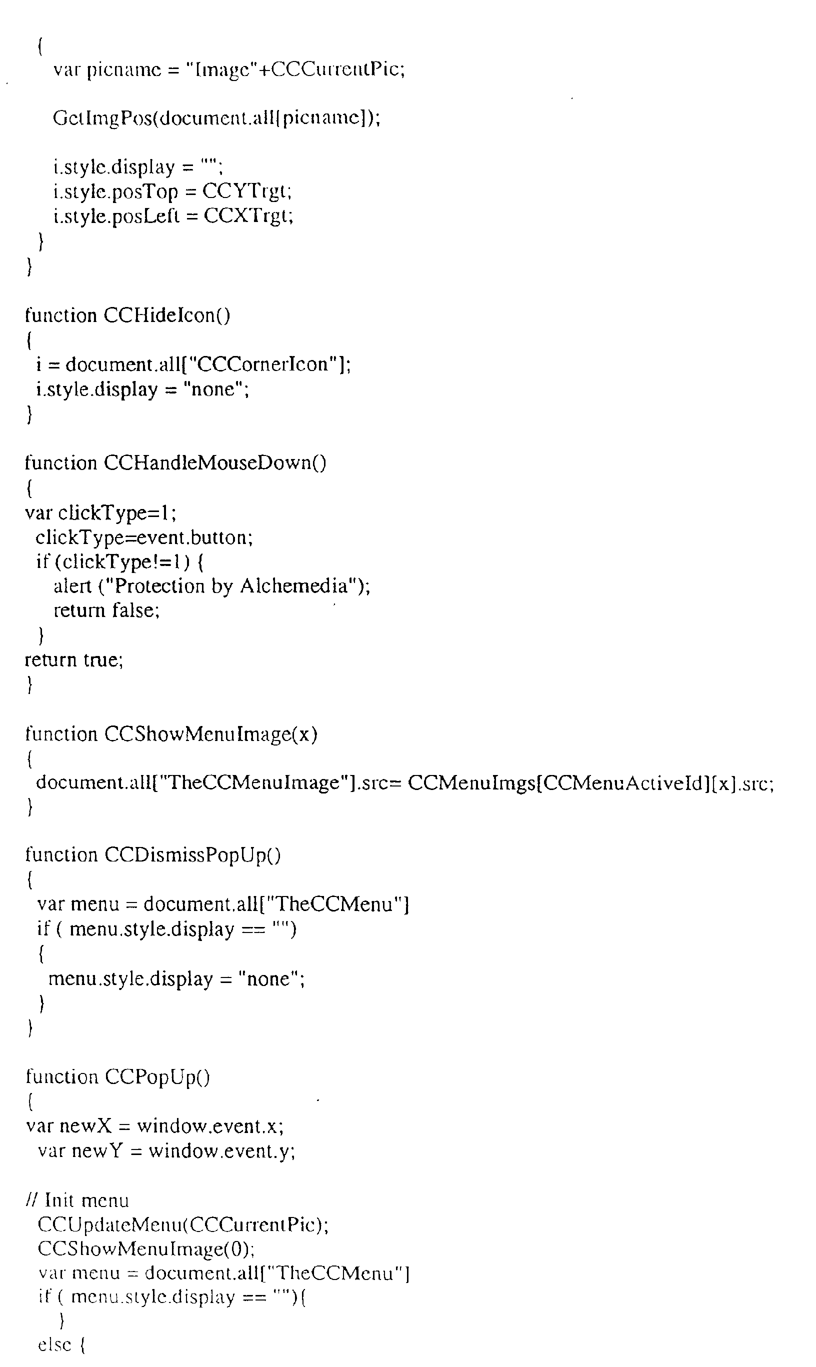

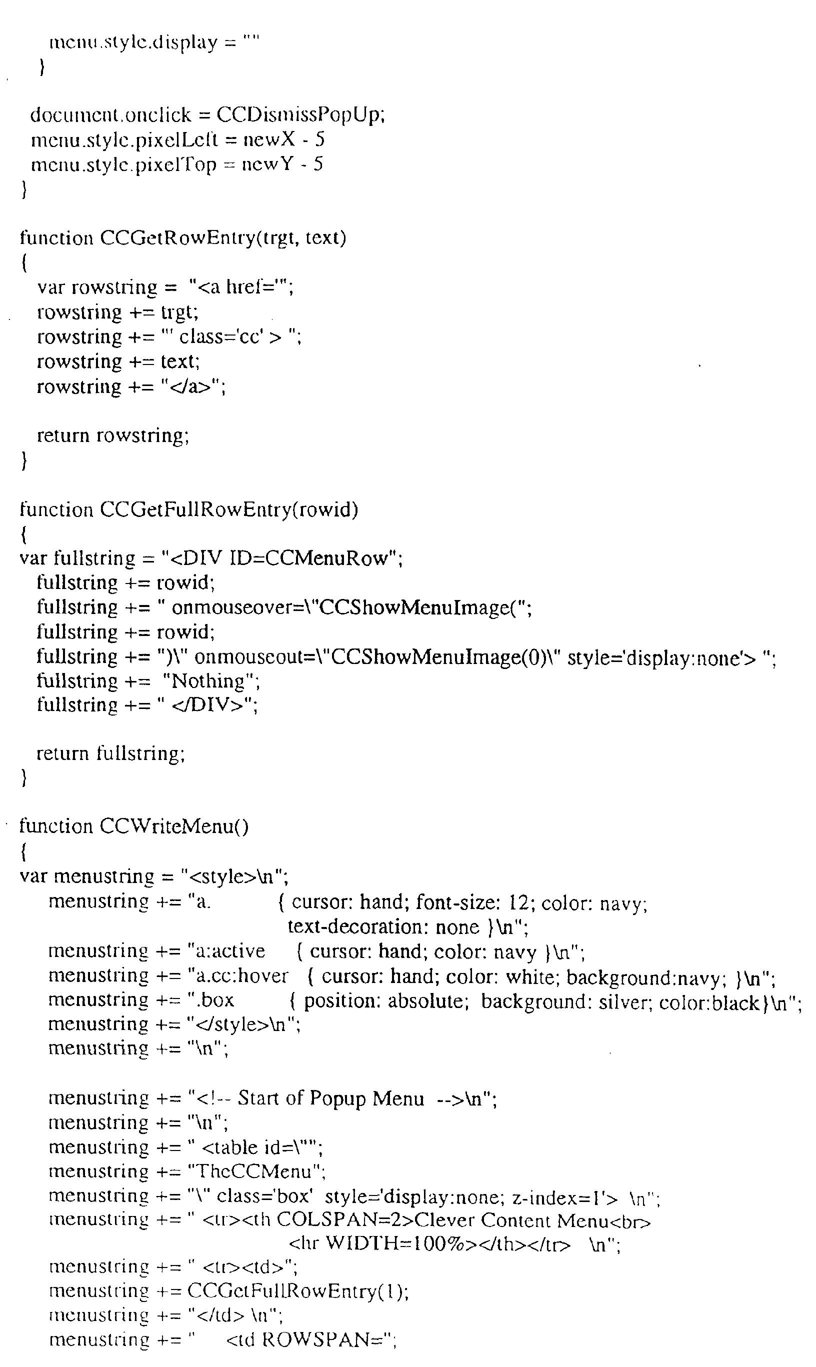

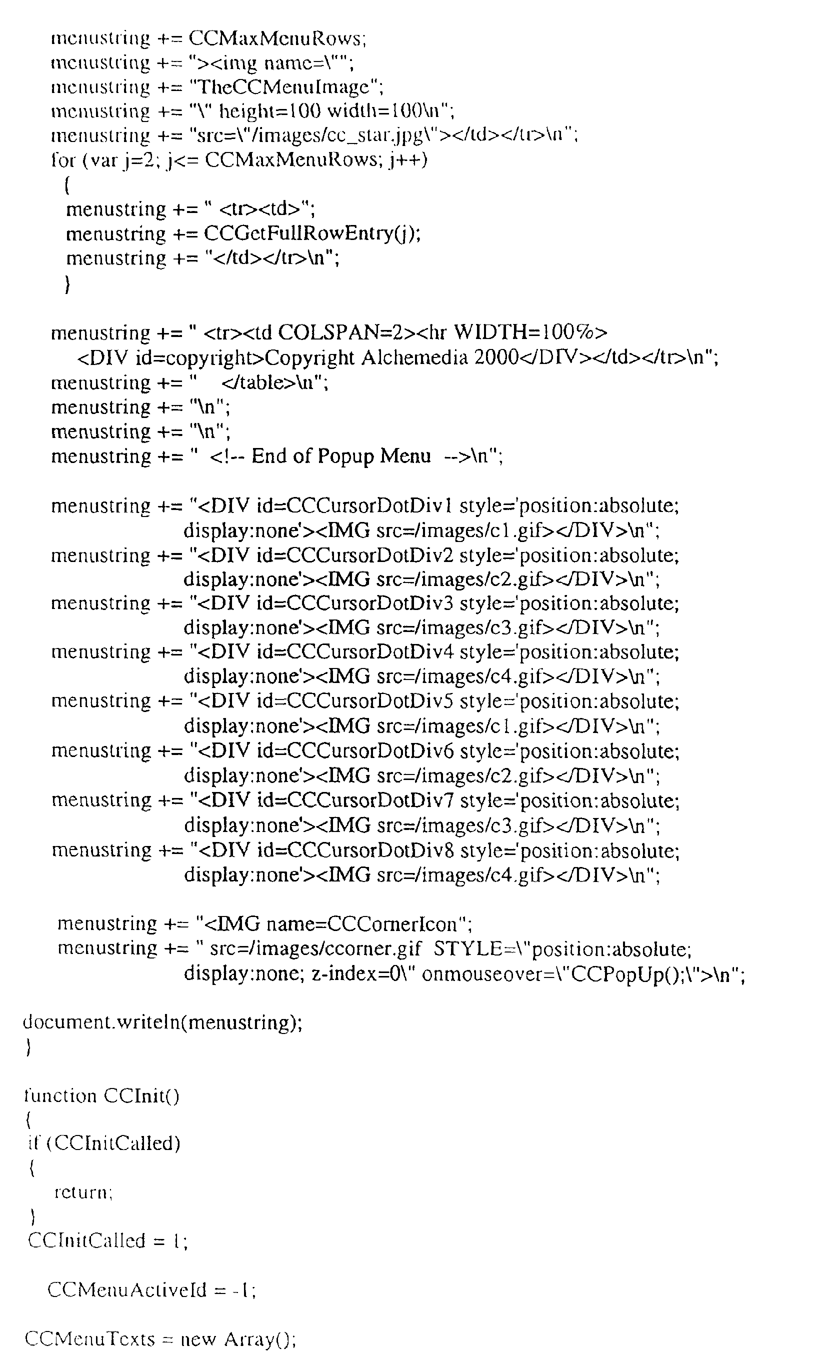

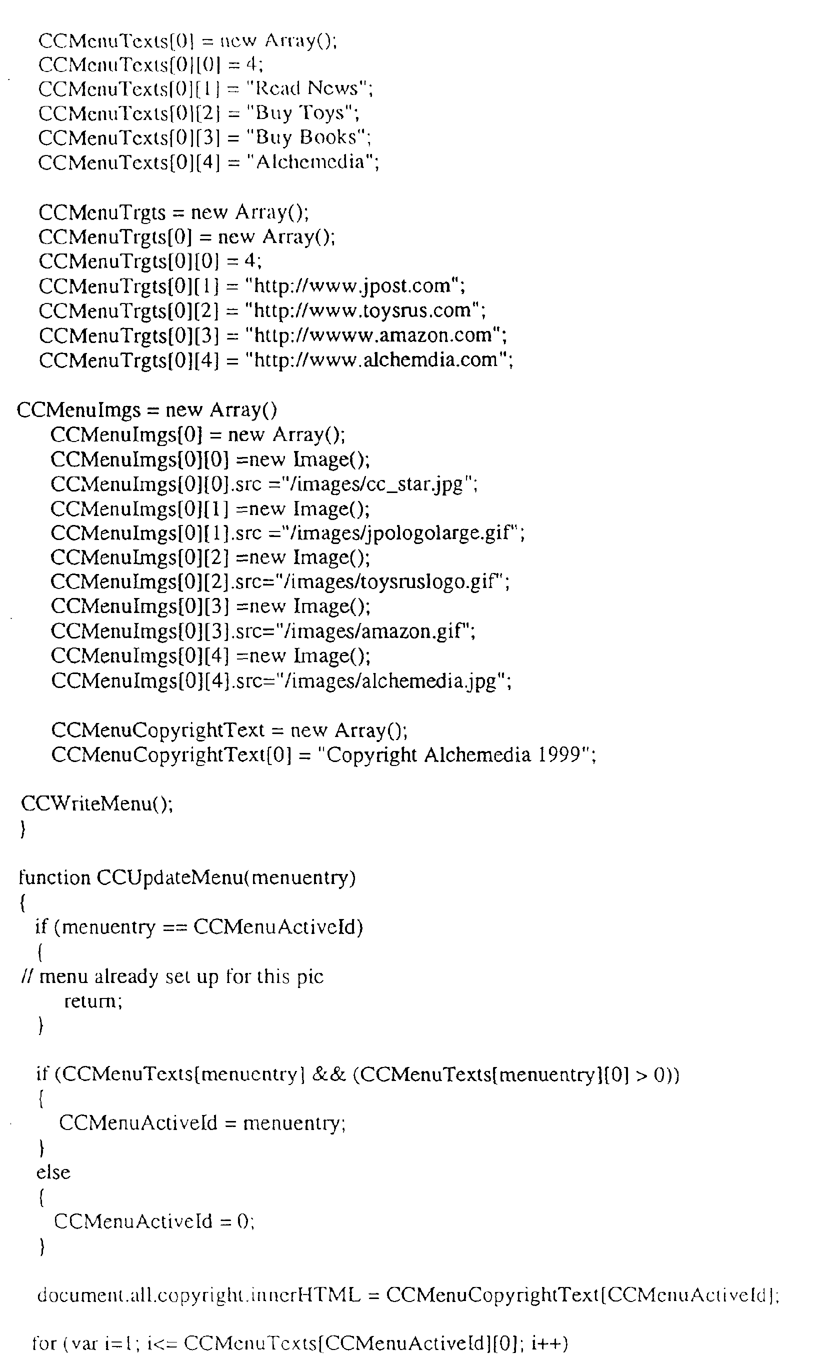

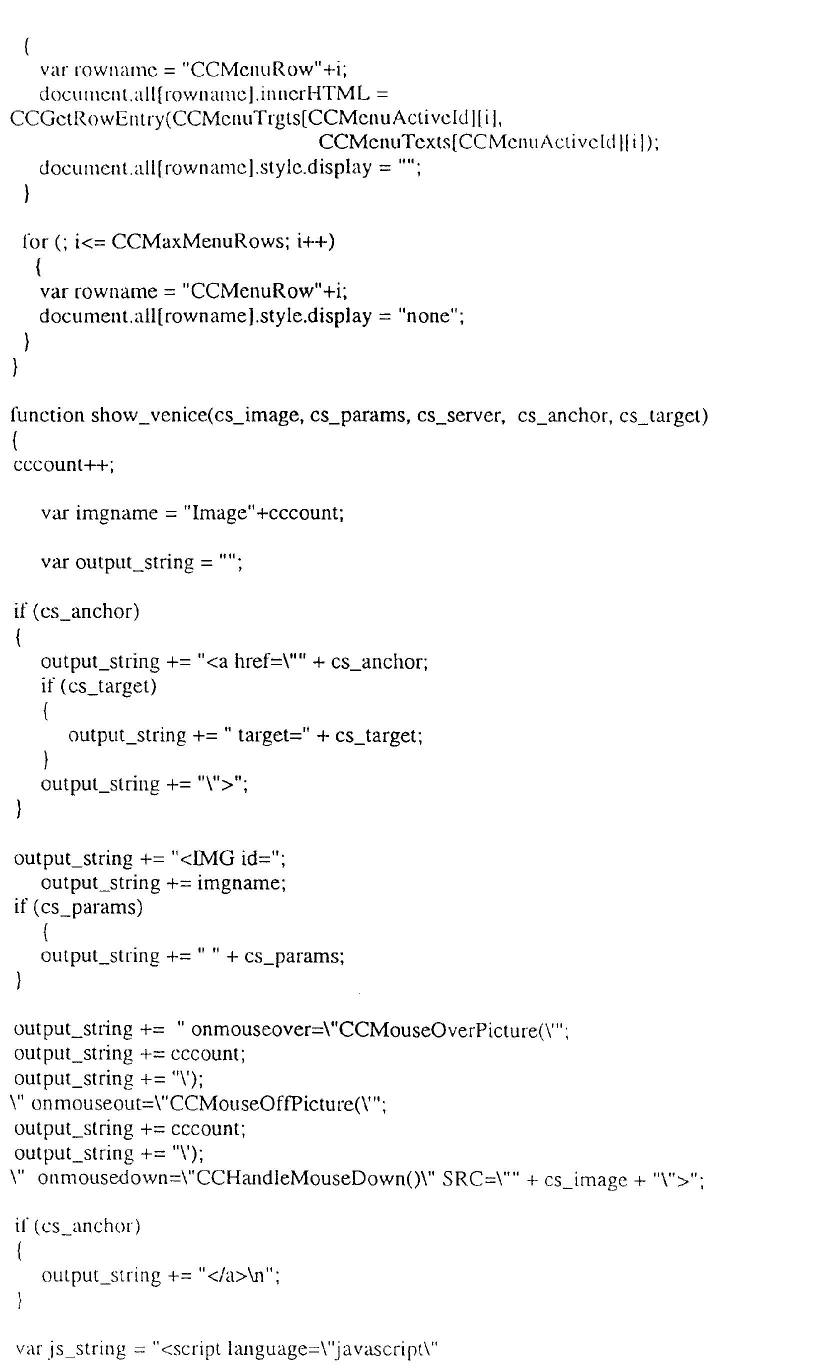

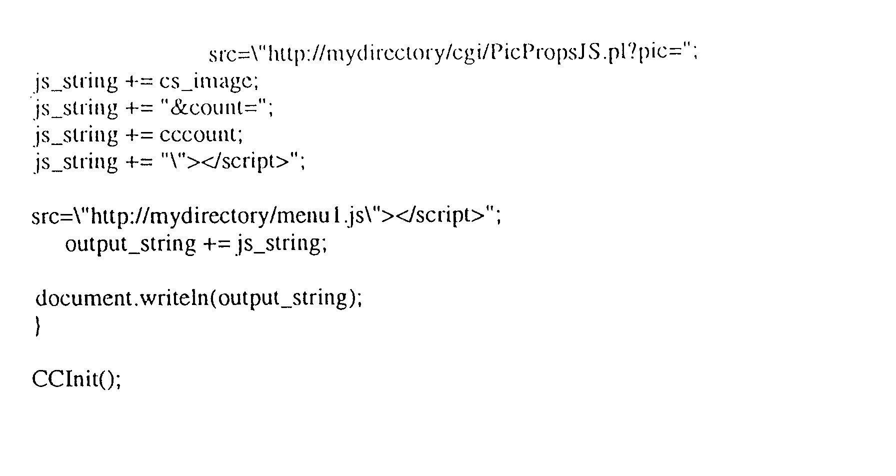

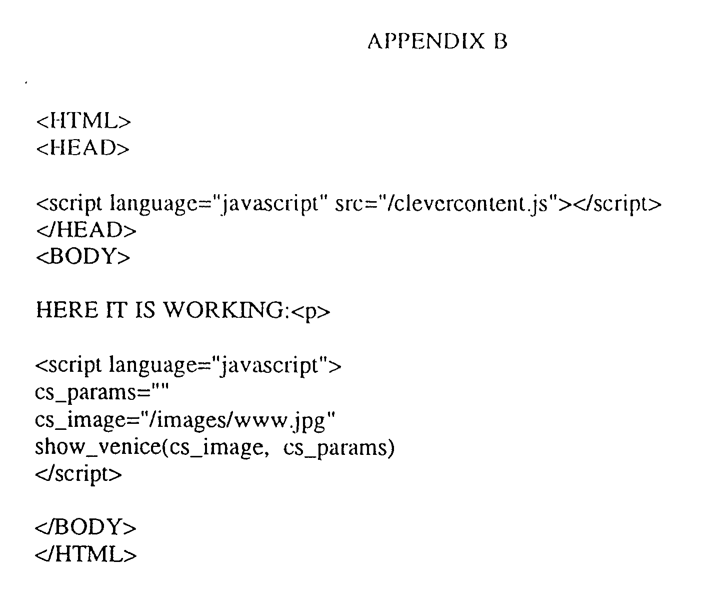

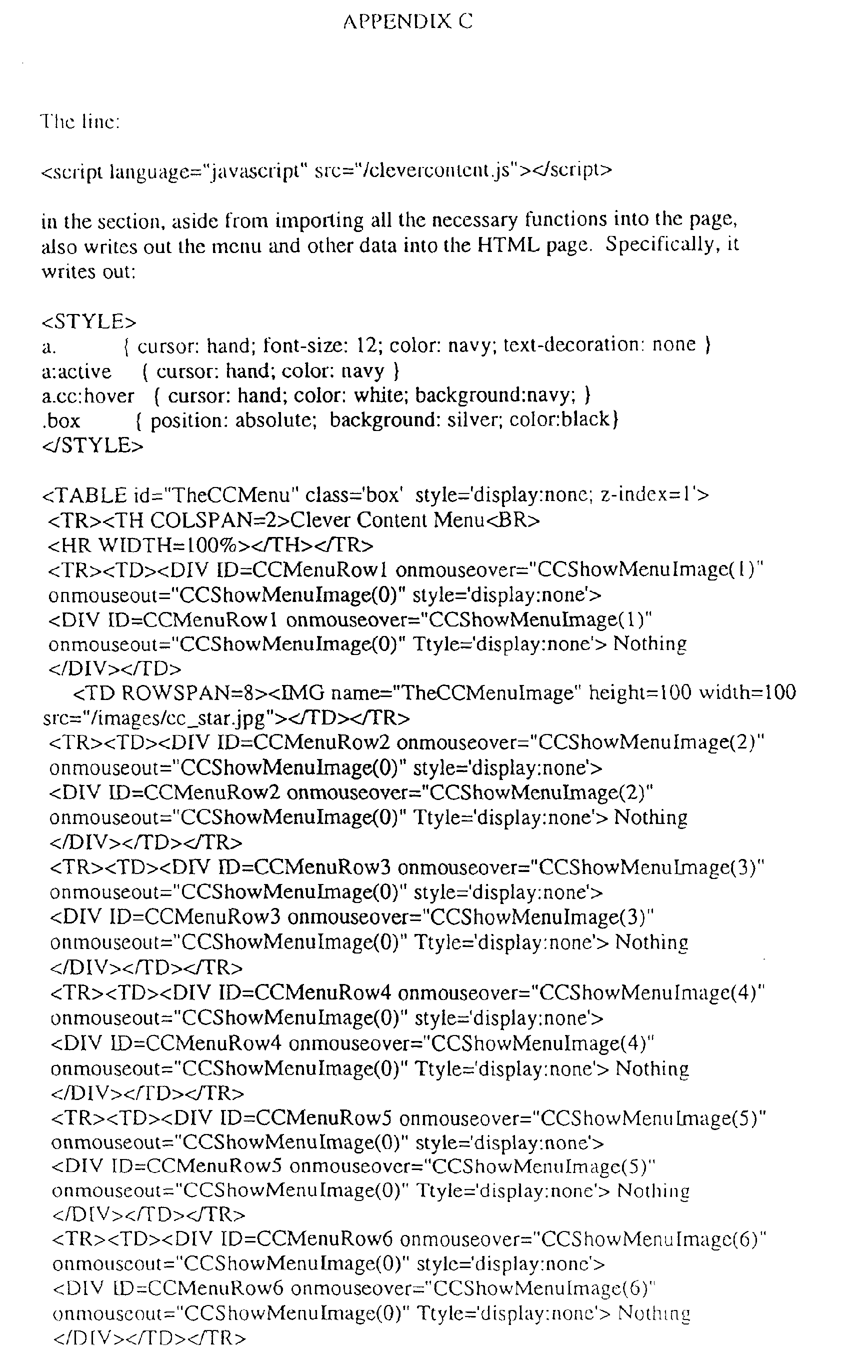

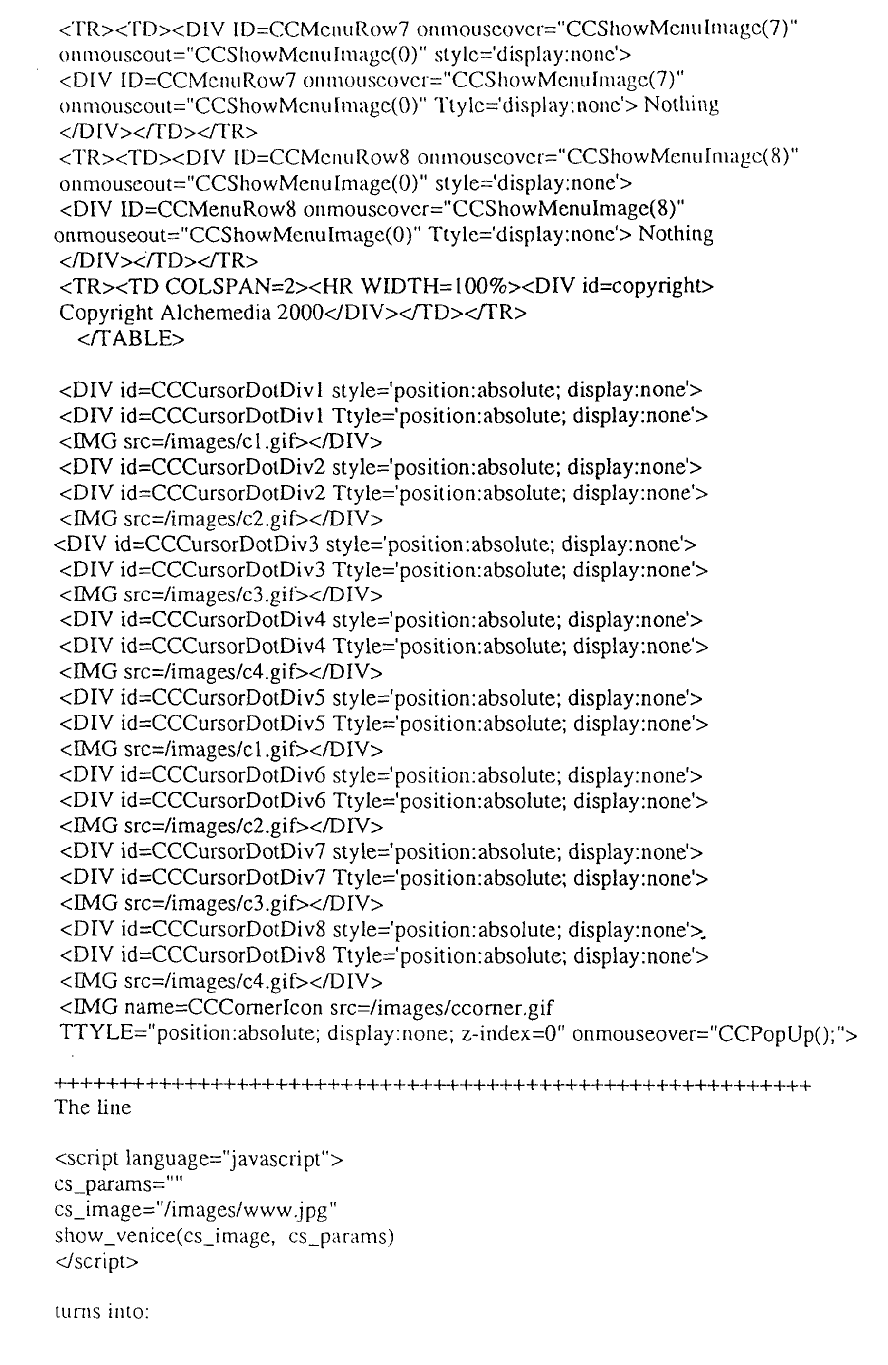

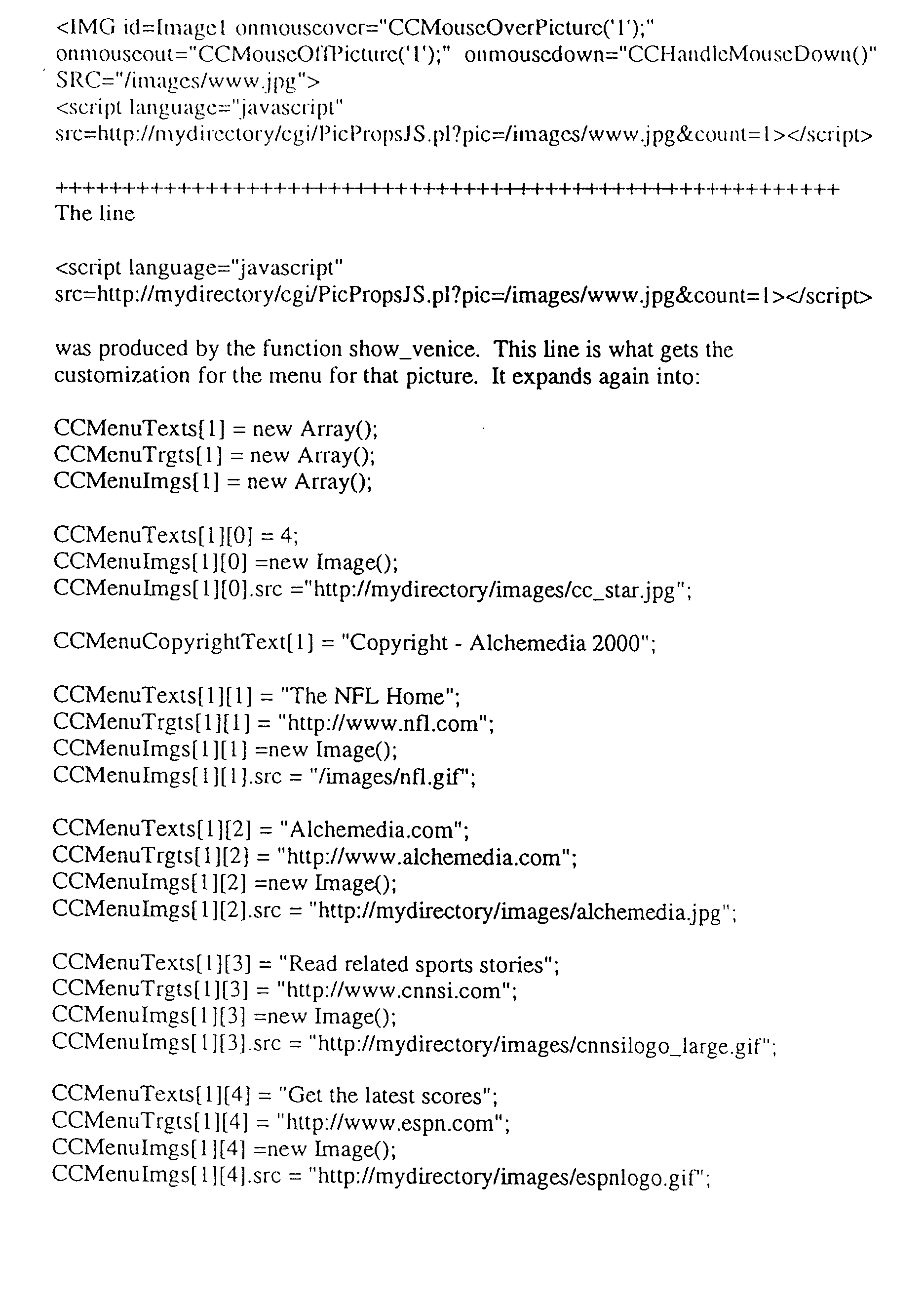

## Claims

1. A method for controlling the use and re-use of digital images, comprising the steps of:
providing by a first server computer (905) to a client computer (920) a digital image file (100) including a digital image (925, 110) and including goods and services data (130), the goods and services data determining at least one link (330) to at least one web page;
displaying the digital image on the client computer;
in response to a first interactive command performed by a user on the displayed digital image, further displaying the at least one link to at least one web page; and
in response to a second interactive command performed by the user on the displayed at least one link, delivering by a second server computer (955) to the client computer, a web page indicated by the at least one link.

2. The method of claim 1 wherein the goods and services data references at least one database including goods and services information.

3. The method of claim 2 wherein the goods and services information includes price information for at least one photo product.

4. The method of claim 2 wherein the goods and services information includes header information for at least one photo product.

5. The method of claim 4 wherein the digital image file includes image description data (120), the image description data including at least one key word (230) associated with the digital image, the method further comprising the step of inserting at least one key word into header information.

6. The method of claim 2 wherein the goods and services data includes text information for at least one photo product.

7. The method of claim 6 wherein the digital image file includes image description data (120), the image description data including at least one key word associated with the digital image, the method further comprising the step of inserting at least one key word into text information.

8. The method of claim 2 wherein the goods and services information includes category information for at least one photo product

9. The method of claim 2 wherein the goods and services information includes instructions for opening the web pages indicated by the at least one link.

10. The method of claim 9 wherein the instructions for opening the web pages indicated by the at least one link include instructions for opening the web pages in the same window in which the digital image is being viewed.

11. The method of claim 9 wherein the instructions for opening the web pages indicated by the at least one link include instructions for opening the web pages in a new window.

12. The method of claim 2 wherein the digital image file also includes image description data, the image description data including rules (240) for re-posting the digital image.

13. The method of claim 12 wherein the rules for re-posting the digital image include rules for locking the digital image to a specific network domain.

14. The method of claim 2 further comprising the step of inserting new transactional information into the at least one database.

15. The method of claim 2 further comprising the step of deleting transactional information from the at least one database.

16. The method of claim 2 further comprising the step of modifying transactional information in the at least one database.

17. The method of claim 1 wherein the first interactive command performed by a user on the displayed digital image is positioning of a mouse over the displayed digital image.

18. The method of claim 1 wherein the first interactive command performed by a user on the displayed digital image is right-clicking on a mouse while it is positioned over the displayed digital image.

19. The method of claim 1 wherein the first interactive command performed by a user on the displayed digital image is left-clicking on a mouse while it is positioned over the displayed digital image.

20. The method of claim 1 wherein the web page delivered by the second server computer enables the use to perform a transaction involving the digital image.

21. The method of claim 20 wherein the transaction involving the digital image is a purchase of a photo product having the digital image thereon

22. The method of claim 20 wherein the transaction involving the digital image is a purchase of a license to copy the digital image.

23. The method of claim 20 wherein the transaction involving the digital image is a purchase of a license to use the digital image.

24. The method of claim 1 wherein the second server computer is the same as the first server computer.

25. The method of claim 1 wherein the second server computer is different from the first server computer.

26. The method of claim 1 wherein the digital image within the digital image file is an encrypted digital image.

27. A system for controlling the use and re-use of digital images, comprising:
a first transmitter providing, by a server computer to a client computer, a digital image file including a digital image and including goods and services data, the goods and services data determining at least one link to at least one web page;
a viewer displaying the digital image on the client computer and displaying, in response to a first interactive command performed by a user on the displayed digital image, the at least one link to at least one web page; and
a second transmitter delivering by a second server computer to the client computer, in response to a second interactive command performed by the user on the at least one link, a web page indicated by the at least one link.

28. The system of claim 27 further comprising at least one database including goods and services information, and wherein the goods and services data references the database.

29. The system of claim 28 wherein the goods and services information includes price information for at least one photo product.

30. The system of claim 28 wherein the goods and services information includes header information for at least one photo product.

31. The system of claim 30 wherein the digital image file includes image description data, the image description data including at least one key word associated with the digital image, the system further comprising means for inserting at least one key word into header information.

32. The system of claim 28 wherein the goods and services information includes text information for at least one photo product.

33. The system of claim 32 wherein the digital image file includes image description data, the image description data including at least one key word associated with the digital image, the system further comprising means for inserting at least one key word into text information.

34. The system of claim 28 wherein the goods and services information includes category information for at least one photo product.

35. The system of claim 29 further comprising a database manager, for managing the photo product data in the at least one database.

36. The system of claim 35 wherein said database manager inserts new transactional information into the at least one database.

37. The system of claim 35 wherein said database manager deletes transactional information from the at least one database.

38. The system of claim 35 wherein said database manager modifies transactional information in the at least one database.

39. The system of claim 27 wherein the first interactive command performed by a user on the displayed digital image is positioning of a mouse over the displayed digital image.

40. The system of claim 27 wherein the first interactive command performed by a user on the displayed digital image is right-clicking on a mouse while it is positioned over the displayed digital image.

41. The system of claim 27 wherein the first interactive command performed by a user on the displayed digital image is left-clicking on a mouse while it is positioned over the displayed digital image.

42. The system of claim 27 wherein the web page enables the client computer to perform a transaction involving the digital image.

43. The system of claim 42 wherein the transaction involving the digital image is a purchase of a photo product having the digital image thereon.

44. The system of claim 42 wherein the transaction involving the digital image is a purchase of a license to copy the digital image.

45. The system of claim 42 wherein the transaction involving the digital image is a purchase of a license to use the digital image.

46. The system of claim 27 wherein the second server computer is the same as the first server computer.

47. The system of claim 46 wherein the second transmitter is the same as the first transmitter.

48. The system of claim 46 wherein the second transmitter is different from the first transmitter.

49. The system of claim 27 wherein the second server computer is different from the first server computer.

50. The system of claim 27 wherein the digital image within the digital image file is an encrypted digital image.

51. A method for controlling the use and re-use of digital images, comprising the steps of:
providing by a first server computer to a client computer a digital image file including a digital image and including goods and services data, the goods and services data determining at least one link to at least one web page;
displaying the digital image on the client computer;
further displaying the at least one link to at least one web page; and
in response to an interactive command performed by the user on the displayed at least one link, delivering by a second server computer to the client computer, a web page indicated by the at least one link.

52. A system for controlling the use and re-use of digital images, comprising:
a first transmitter providing, by a server computer to a client computer, a digital image file including a digital image and including goods and services data, the goods and services data determining at least one link to at least one web page;
a viewer displaying the digital image on the client computer and displaying the at least one link to at least one web page; and
a second transmitter delivering by a second server computer to the client computer, in response to an interactive command performed by the user on the at least one link, a web page indicated by the at least one link.

53. A method of controlling the use of digital images, comprising the steps of:
operating a first server computer to receive a request from a client computer;
the first server computer outputting a response message containing the digital image for transmission to the client computer; and
wherein the response message output by the first server computer comprises code for being interpreted by browser software of the client computer in use, said code comprising an image file containing the digital image data and goods and services data determining at least one link to at least one web page, and said code further comprising instructions for controlling the browser to display the image and to respond to any command to re-use the image by displaying the goods and services data including said at least one link.

54. A method of controlling the use of digital images as claimed in claim 53 wherein said at least one link defines a web page from which authority to use said image is obtainable.

55. A method as claimed in any of claims 53 and 54 wherein the image file further comprises image description data defining rules for controlling repositioning of the image.

56. A method of processing digital image data to control use of the image data when supplied to a user, the method comprising encoding the image data into a form which can be interpreted by a browser of a client computer and such that the encoded image data comprises:
an image file containing the image data and goods and services data determining at least one link to at least one web page; and
instructions for controlling the browser to display the image and to respond to any command to re-use the image by displaying the goods and services data including the at least one link.

57. A storage medium storing encoded image data processed by a method as claimed in claim 56.

58. An electrical signal carrying encoded image data processed by a method as claimed in claim 56.

59. A storage medium storing processor implementable instructions for controlling a processor to carry out a method as claimed in claim 56.

60. An electrical signal carrying processor implementable instructions for controlling a processor to carry out a method as claimed in claim 56.

61. A method of operating a client computer to access digital images, the method comprising the steps of:
responding to a first user command by generating a request message for a digital image and outputting the request message for transmission to a first server computer;
receiving a response message from the first server computer, the response message comprising code defining an image file containing digital image data representative of the digital image and goods and services data determining at least one link to at least one web page, the code further comprising instructions for controlling the manner in which the image data and goods and services data can be displayed;
operating a browser to interpret the code and thereby displaying the digital image;
wherein the instructions cause the browser to respond to any user command to re-use the image by displaying the goods and services data including said at least one link.

62. A method as claimed in claim 61 including the further steps of responding to a second user command by outputting a request for web page information via a selected one of said links; and
receiving and displaying the web page information.
